# EUROPEAN PATENT APPLICATION

(11) **EP 4 835 747 A1**
(43) Date of publication of application: **04.11.2026**
(21) Application number: 25856252.9
(22) Date of filing: 18.08.2025
(51) Int. Cl.: G06N 5/045

(54) **INTELLIGENT SEISMIC HIGH-FREQUENCY SEQUENCE INTERPRETATION METHOD AND APPARATUS USING LOGGING INFORMATION**

(30) Priority: 19.08.2024 CN 202411138990
(71) Applicant: China National Petroleum Corporation, Beijing 100007 (CN)
(72) Inventor: FAN, Guozhang, Beijing 100007 (CN); WANG, Wangquan, Beijing 100007 (CN); WANG, Hongping, Beijing 100007 (CN); LI, Weiqiang, Beijing 100007 (CN); OU, Chenghua, Beijing 100007 (CN); ZHU, Xiaohui, Beijing 100007 (CN); XIAO, Lei, Beijing 100007 (CN); JIANG, Weimin, Beijing 100007 (CN); LI, Hang, Beijing 100007 (CN); LI, Chaochun, Beijing 100007 (CN); LI, Guojun, Beijing 100007 (CN)
(74) Representative: Petraz, Gilberto Luigi
(86) International application number: PCT/CN2025/115293
(87) International publication number: WO 2026/040952

(57) **Abstract**

The present invention belongs to the technical field of petroleum and natural gas exploration. Provided are an intelligent seismic high-frequency sequence interpretation method and apparatus using logging information. The method comprises: inputting, into a sequence stratigraphy prediction model in a current state, seismic attribute data of determined point locations, which are determined on the basis of a sequential path, along a well-tie seismic trace of a known conditioning well in a target block, so as to obtain high-frequency sequence stratigraphy data of the determined point locations; and determining whether any high-frequency sequence stratigraphy data of a point location in the target block has not been obtained, and if any high-frequency sequence stratigraphy data of a point location in the target block has not been obtained, adding the high-frequency sequence stratigraphy data of the determined point locations to sequential simulation conditioning data, using updated sequential simulation conditioning data to construct a learning sample to train the sequence stratigraphy prediction model in the current state, and then jumping to the previous step to perform high-frequency sequence stratigraphy prediction on the next determined point location determined on the basis of the sequential path. The method can be applied to onshore early-exploration blocks and offshore sparse-well blocks, etc., so as to realize high-frequency sequence interpretation of these blocks with high efficiency, low costs and high accuracy.

## Description

### Cross Reference to Related Applications

The present application claims priority to Chinese Patent Application No. 202411138990.5, filed on August 19, 2024, the contents of which are incorporated herein by reference.

### Field of the Invention

The present invention belongs to the technical field of oil and natural gas exploration, and specifically relates to a method for intelligent interpretation of a seismic high-frequency sequence using logging information, an apparatus for intelligent interpretation of a seismic high-frequency sequence using logging information, a computer device, and a machine-readable storage medium.

### Background of the Invention

In the field of oil and natural gas exploration, structural interpretation of seismic data is a fundamental and important task, and using seismic profiles to trace stratigraphic interfaces is one of key steps in identifying and evaluating oil and gas reservoirs. As domestic oil and gas exploration efforts continue to intensify at present, exploration targets are also gradually shifting from mature onshore blocks to offshore areas, with deep water/ultra-deep water of passive continental margin basins in the offshore areas having become primary arenas for the discovery of conventional large and medium-sized oil and gas fields worldwide. As deepwater oil and gas exploration, evaluation, and development continue to advance, seismic structural interpretation for offshore few-well/sparse-well blocks has become significantly challenging in terms of interpretation difficulty, operation workload, accuracy, precision, and timeliness requirements. In particular, in interpretation of seismic high-frequency sequences in the offshore few-well blocks, due to a low thickness of high-frequency cyclic stratigraphy, how to use limited drilling, logging, and seismic information to rapidly and accurately perform horizon interpretation of the high-frequency cyclic stratigraphy is also a difficult problem in the field of seismic structural interpretation. Fine structural characterization and geological modeling based on the interpretation of the seismic high-frequency sequences have become significant challenges constraining efficient exploration, evaluation, and development of conventional large and medium-sized oil and gas fields by oil companies.

For a mature exploration and development block, drilling data are abundant, and a well control degree of the block is very high. High-frequency sequence stratigraphy data from interpretation via abundant drilling and logging data may be fully used, with lateral trend information from seismic data in an exploration stage performing auxiliary constraints, so that interpretation of a high-frequency sequence can be completed. However, for an early-stage onshore exploration block and an offshore few-well block, drilling and logging data are very limited, and a well control degree is extremely low. Therefore, it is necessary to fully exploit high-frequency cyclic stratigraphy information in seismic data based on the high-frequency cyclic stratigraphy information of limited drilling and logging, to achieve a prediction of a seismic high-frequency sequence using drilling and logging information.

Research on the prior art for seismic identification of high-frequency sequences has revealed that existing technical solutions for traditional seismic identification of high-frequency sequences mainly fall into two types. The first type of solution mainly relies on the creation of synthetic records to establish correlations between seismic horizons and logging horizons, and to identify and determine stratigraphic boundaries through manual interpretation. The second type of solution is a neural network-based method for predicting a seismic subdivided sequence. The first type of solution mainly has the following shortcomings. 1) Due to limitations of the resolution of seismic data, it is impossible to calibrate high-frequency stratigraphy information at a logging scale into the seismic data, and consequently, it is impossible to perform high-precision division on geological stratigraphy in a target block. Even interpretation is performed on a seismic high-frequency sequence in the target block after frequency-enhancement processing and 90° phase conversion are performed on seismic data under the guidance of a theoretical and technical system of seismic sedimentology, there are still shortcomings such as long time consumption of manual interpretation, low efficiency, and insufficient accuracy. 2) For an offshore few-well block in the early stage of exploration, seismic data typically cover a large area, requiring a plurality of geophysical interpreters to collaborate on horizon tracking and interpretation. However, because different interpreters may have varying understandings of areal geology and sedimentary sequences in a study area, seismic interpretation results may be significantly influenced by human factors, leading to uncertainty regarding accuracy and reliability of horizon interpretation results. Therefore, the interpreters need to possess deep understandings of the seismic response characteristics of the areal geology and the sedimentary sequences in the study area. Clearly, this places high requirements on professional levels of the interpreters. The second type of solution mainly has the following shortcomings. For interpretation of stratum high-frequency sequences under conditions with scarce drilling and logging data of early-stage onshore exploration blocks, offshore few-well blocks, etc., there are problems such as limited data learning and modeling capabilities of existing artificial intelligence models for large-area seismic data, underutilization of multi-attribute seismic information, and difficulty in fully extracting high-frequency sequence information in seismic data.

### Summary of the Invention

Objectives of embodiments of the present invention are to provide a method for intelligent interpretation of a seismic high-frequency sequence using logging information, an apparatus for intelligent interpretation of a seismic high-frequency sequence using logging information, a computer device, and a machine-readable storage medium, to overcome one or more shortcomings existing in manual interpretation means and a deep learning technology used for interpretation of seismic high-frequency sequences in early-stage exploration blocks and offshore few-well blocks in the prior art.

To achieve the above objectives, a first aspect of embodiments of the present invention provides a method for intelligent interpretation of a seismic high-frequency sequence using logging information. The method includes: inputting depth-information-associated seismic attribute data of a determined seismic trace point location into a sequence stratigraphy prediction model in a current state, so as to obtain high-frequency sequence stratigraphy data of the determined seismic trace point location, wherein the determined seismic trace point location is a point location, which is determined according to a sequential path, on a well-tie seismic trace of a known conditioning well in a target block; and judging whether high-frequency sequence stratigraphy data of any seismic trace point location in the target block are not obtained, adding, if yes, the high-frequency sequence stratigraphy data of the determined seismic trace point location to sequential simulation condition data to update the sequential simulation condition data, using updated sequential simulation condition data to construct a learning sample to train the sequence stratigraphy prediction model in the current state, so as to obtain a trained sequence stratigraphy prediction model, then jumping to the previous step to perform a high-frequency sequence stratigraphy prediction on a next determined seismic trace point location determined according to the sequential path, and completing, if not, a high-frequency sequence stratigraphy prediction for the target block; wherein initial-state sequential simulation condition data are used to construct a learning sample to train an initial sequence prediction neural network, then the sequence stratigraphy prediction model in an initial state is obtained, and the initial-state sequential simulation condition data include logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

Optionally, inputting the depth-information-associated seismic attribute data of the determined seismic trace point location into the sequence stratigraphy prediction model in the current state, so as to obtain the high-frequency sequence stratigraphy data of the determined seismic trace point location includes: determining, according to the sequential path, the determined seismic trace point location, on which a high-frequency sequence stratigraphy prediction is to be performed, on the well-tie seismic trace of the known conditioning well in the target block; determining stratigraphy information of the determined seismic trace point location according to stratum top and bottom surface information learned from seismic data of the target block; forming a seismic attribute sequence from seismic attribute data corresponding to each horizon in the determined seismic trace point location; and associating and then inputting the seismic attribute sequence with depth information of each horizon in the determined seismic trace point location into the sequence stratigraphy prediction model in the current state, so as to obtain the high-frequency sequence stratigraphy data of the determined seismic trace point location.

Optionally, adding the high-frequency sequence stratigraphy data of the determined seismic trace point location to the sequential simulation condition data to update the sequential simulation condition data includes: establishing a correspondence between the seismic attribute data and the high-frequency sequence stratigraphy data of the determined seismic trace point location; and adding, to the sequential simulation condition data, the seismic attribute data and the high-frequency sequence stratigraphy data of the determined seismic trace point location between which the correspondence is established, so as to update the sequential simulation condition data, wherein the updated sequential simulation condition data include the seismic attribute data and the high-frequency sequence stratigraphy data between which the correspondence is established, as well as the seismic attribute data in the target block for which no corresponding high-frequency sequence stratigraphy data are obtained.

Optionally, using the initial-state sequential simulation condition data to construct the learning sample to train the initial sequence prediction neural network, and then obtaining the sequence stratigraphy prediction model in the initial state includes: encoding each stratum in the logging high-frequency sequence stratigraphy data of the well-point seismic trace of the known conditioning well in the target block to obtain a stratum encoded sequence for each point location on the well-point seismic trace of the known conditioning well, and using the stratum encoded sequence for each point location as a sample label for seismic attribute data of each point location in a one-to-one correspondence; and training the initial sequence prediction neural network using the seismic attribute data of each point location on the well-point seismic trace of the known conditioning well and the sample label corresponding to each seismic attribute datum, and obtaining the sequence stratigraphy prediction model in the initial state after training is completed.

Optionally, during associating and then inputting the seismic attribute sequence with the depth information of each horizon in the determined seismic trace point location into the sequence stratigraphy prediction model in the current state, a planar position code for the determined seismic trace point location is further embedded in the seismic attribute sequence for the determined seismic trace point location.

Optionally, the method further includes: obtaining a high-frequency sequence division result for the target block after using a constructed classification model to perform sequence classification on the high-frequency sequence stratigraphy data.

Optionally, the sequence prediction neural network is a sequence prediction neural network with a CRF layer added.

Optionally, the sequence prediction neural network includes a BiLSTM network and the CRF layer connected to an output end of the BiLSTM network.

Optionally, the method further includes: using, after the high-frequency sequence stratigraphy data of the determined seismic trace point location are obtained through the prediction, high-frequency sequence stratigraphy data of a well point of the known conditioning well to perform a geological reasonability judgment on the high-frequency sequence stratigraphy data of the determined seismic trace point location, and correcting, if the high-frequency sequence stratigraphy data of the determined seismic trace point location are unreasonable, the high-frequency sequence stratigraphy data of the determined seismic trace point location.

Optionally, correcting the high-frequency sequence stratigraphy data of the determined seismic trace point location includes: generating, according to an unreasonable sequence of the determined seismic trace point location reflected by the high-frequency sequence stratigraphy data of the determined seismic trace point location and the high-frequency sequence stratigraphy data of the well point of the known conditioning well, a correction instruction for manually correcting the unreasonable sequence; or, generating, according to the unreasonable sequence of the determined seismic trace point location reflected by the high-frequency sequence stratigraphy data of the determined seismic trace point location and the high-frequency sequence stratigraphy data of the well point of the known conditioning well, a correction instruction for adjusting a constraint on the CRF layer, updating the sequence stratigraphy prediction model based on an adjusted constraint on the CRF layer, and inputting the depth-information-associated seismic attribute data of the determined seismic trace point location into an updated sequence stratigraphy prediction model, so as to obtain corrected high-frequency sequence stratigraphy data of the determined seismic trace point location.

Optionally, a seismic trace point location predicted by the sequence stratigraphy prediction model in each state is limited to a circular area centered on a point on the sequential path, and if an overlap area exists between circular areas, a subsequently predicted seismic trace point location in a circular area does not include a seismic trace point location in the overlap area.

Optionally, the sequence stratigraphy prediction model in each state predicts high-frequency sequence stratigraphy data for a point location where an initial circle center on the sequential path is located.

A second aspect of the embodiments of the present invention provides an apparatus for intelligent interpretation of a seismic high-frequency sequence using logging information. The apparatus includes: a first module, configured to input, into a sequence stratigraphy prediction model in a current state, depth-information-associated seismic attribute data of a determined seismic trace point location, which is determined according to a sequential path, on a well-tie seismic trace of a known conditioning well in a target block, so as to obtain high-frequency sequence stratigraphy data of the determined seismic trace point location; and a second module, configured to judge whether high-frequency sequence stratigraphy data of any seismic trace point location in the target block are not obtained, add, if yes, the high-frequency sequence stratigraphy data of the determined seismic trace point location to sequential simulation condition data to update the sequential simulation condition data, use updated sequential simulation condition data to construct a learning sample to train the sequence stratigraphy prediction model in the current state, so as to obtain a trained sequence stratigraphy prediction model, so that the first module performs a high-frequency sequence stratigraphy prediction on a next determined seismic trace point location determined according to the sequential path, and complete, if not, a high-frequency sequence stratigraphy prediction for the target block; wherein initial-state sequential simulation condition data are used to construct a learning sample to train an initial sequence prediction neural network, then the sequence stratigraphy prediction model in an initial state is obtained, and the initial-state sequential simulation condition data include logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

A third aspect of the embodiments of the present invention provides a computer device, including a memory, a processor, and a computer program stored on the memory and capable of running on the processor. The processor, when executing the program, implements the method for intelligent interpretation of the seismic high-frequency sequence using the logging information described in the first aspect of the embodiments of the present invention.

A fourth aspect of the embodiments of the present invention provides a machine-readable storage medium, storing a computer program thereon. The computer program, when executed by a processor, implements the method for intelligent interpretation of the seismic high-frequency sequence using the logging information described in the first aspect of the embodiments of the present invention.

In the above technical solution, the high-frequency sequence stratigraphy data obtained through logging interpretation at the well point of the known conditioning well in the target block, and seismic attributes sensitive to the high-frequency sequence extracted from the seismic data of the well-point seismic trace, are used as initial learning samples to perform learning training on the sequence prediction neural network, so that a sequence horizon prediction model in the initial state is constructed. In addition, based on a sequential simulation technology, the sequence horizon prediction model is used to predict the high-frequency sequence stratigraphy data for the point location on the well-tie seismic trace of the known conditioning well, and a prediction result of the seismic trace point location is extended into the learning samples. Then, according to "learning-predicting-updating-learning" steps, the learning samples are sequentially extended to achieve a gradual expansion from the well-point seismic trace of the known conditioning well to an adjacent seismic trace of the known conditioning well, and ultimately the expansion is performed to a traversal prediction of high-frequency sequence stratigraphy data of all seismic traces in the entire target block.

Based on this, through the technical concept of combining the sequence prediction neural network with sequential simulation, a spatial prediction of the high-frequency sequence for the entire target block is achieved using a small amount of logging information and a large quantity of seismic data in the target block. This overcomes the limitations of a traditional artificial intelligence model in terms of data learning and a modeling capability for large-area seismic data, and the seismic attribute data sensitive to the high-frequency sequence are fully used. Compared to manual interpretation and a deep learning solution based on the traditional artificial intelligence model, this technical solution exhibits high efficiency, high accuracy, and low cost, and has significant application value for risk exploration of oil and gas fields in few-well/sparse-well blocks, as well as for fine structural modeling, and evaluation and development of oil and gas reservoirs.

Other features and advantages of the embodiments of the present invention will be described in detail in the subsequent detailed description.

### Brief Description of Drawings

Accompanying drawings are used to provide a further understanding of embodiments of the present invention, constitute a part of the specification, are used to explain the embodiments of the present invention together with the following detailed description, but do not constitute a limitation to the embodiments of the present invention. In the accompanying drawings:
FIG. 1 schematically shows a flowchart of a method for intelligent interpretation of a seismic high-frequency sequence using logging information according to an embodiment of the present invention;
FIG. 2 schematically shows a technical roadmap of a method for intelligent interpretation of a seismic high-frequency sequence using logging information in a specific application example;
FIG. 3 schematically shows a schematic diagram of a shape of a target prediction block and locations of known conditioning wells in a specific application example;
FIG. 4 schematically shows a first seismic attribute profile extracted from seismic data in a specific application example;
FIG. 5 schematically shows a second seismic attribute profile extracted from seismic data in a specific application example;
FIG. 6 schematically shows a third seismic attribute profile extracted from seismic data in a specific application example;
FIG. 7 schematically shows a fourth seismic attribute profile extracted from seismic data in a specific application example;
FIG. 8 schematically shows a diagram of an arrangement of horizon labels in a specific application example;
FIG. 9 schematically shows a prediction example of a BiLSTM+CRF model in a specific application example;
FIG. 10 schematically shows a diagram of a comparison between prediction effects from a sequence horizon prediction model without a CRF layer added and a sequence horizon prediction model with a CRF layer added in a specific application example, wherein part (a) is a diagram of the prediction effect from the sequence horizon prediction model without the CRF layer added, and part (b) is a diagram of the prediction effect from the sequence horizon prediction model with the CRF layer added;
FIG. 11 schematically shows a diagram of a sequential simulation process according to a sequential path in a specific application example, wherein part (a) to part (d) are schematic diagrams of four stages of the sequential simulation process respectively;
FIG. 12 schematically shows a schematic diagram of an operating principle of a Softmax classifier in a specific application example;
FIG. 13 schematically shows an example diagram of seismic profile display after frequency enhancement of prediction results of 6 stratigraphy interfaces in a specific application example;
FIG. 14 schematically shows a model example diagram of three-dimensional structural horizons of 6 stratigraphy interfaces in a specific application example;
FIG. 15 schematically shows a composition block diagram of an apparatus for intelligent interpretation of a seismic high-frequency sequence using logging information according to an embodiment of the present invention; and
FIG. 16 schematically shows a structural block diagram of a computer device according to an embodiment of the present invention.

### Detailed Description of the Embodiments

Detailed implementations of embodiments of the present invention are described in detail below in combination with accompanying drawings. It should be understood that the detailed implementations described here are only used to illustrate and explain the embodiments of the present invention and are not used to limit the embodiments of the present invention.

### Embodiment 1

A method for intelligent interpretation of a seismic high-frequency sequence using logging information provided by the embodiment of the present invention may be applied to interpretation of seismic high-frequency sequences of early-stage onshore exploration blocks and offshore few-well blocks, and these blocks have large-area seismic data and a small quantity of logging data. It should be noted that the above statement does not constitute a limitation on the application scenarios of the embodiment of the present invention. It may be known that the embodiment may also be applied to interpretation of seismic high-frequency sequences of other blocks with large-area seismic data and a small quantity of logging data. Therefore, the application scenarios of the embodiment of the present application are broad.

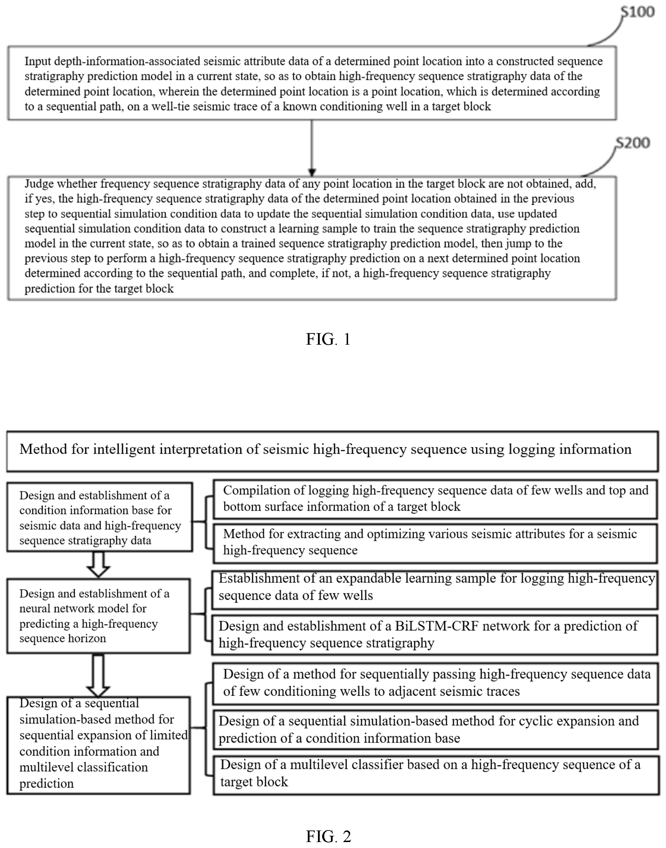

Referring to FIG. 1, an embodiment of the present invention provides a method for intelligent interpretation of a seismic high-frequency sequence using logging information, including the following implementation steps S100 to S200.

Step S100, depth-information-associated seismic attribute data of a determined seismic trace point location are input into a constructed sequence stratigraphy prediction model in a current state, so as to obtain high-frequency sequence stratigraphy data of the determined seismic trace point location, wherein the determined seismic trace point location is a point location, which is determined according to a sequential path, on a well-tie seismic trace of a known conditioning well in a target block. The sequence stratigraphy prediction model in an initial state is obtained after initial-state sequential simulation condition data are used to construct a learning sample to perform training and parameter optimization on an initial sequence prediction neural network. The initial-state sequential simulation condition data include logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

Based on the above statement, it should be understood that:
1) the known conditioning well is a well that has been drilled with known conditions.
2) The seismic attribute data are typically divided into various types according to motion dynamics, acquisition methods, etc. That is, types of seismic attributes extractable from seismic data are very abundant. Here, the seismic attribute data used as input data for the sequence stratigraphy prediction model are the seismic attribute data sensitive to the high-frequency sequence. "Sensitive to the high-frequency sequence" refers, as the name implies, to types of seismic attributes that have a strong correlation with changes in high-frequency sequence horizons. Generally, there are various seismic attribute data that are sensitive to the high-frequency sequence. Based on expert experience, various seismic attribute data used as the input data for the sequence stratigraphy prediction model may be determined from various seismic attribute data that are sensitive to the high-frequency sequence. It is also possible to analyze various seismic attribute data based on correlation analysis methods, such as principal component analysis (PCA), to obtain various seismic attribute data that have a strong correlation with high-frequency sequence stratigraphy, and the seismic attribute data are used as the input data for the sequence stratigraphy prediction model.
3) Sequential simulation (SS) is a type of conditional simulation means. Its simulation concept involves sequentially calculating a simulation value of each grid node along a predefined path.
4) Establishing a correspondence between logging high-frequency sequence stratigraphy data and seismic attribute data of a well-point seismic trace of the known conditioning well in the target block refers to that: to form initial-state learning samples, it is necessary to establish a correspondence between the samples and sample labels in advance. That is, seismic attribute data extracted from seismic data belonging to a certain seismic trace point location are correspondingly associated with logging high-frequency sequence stratigraphy data of the seismic trace point location. For example, correlations may be established through depth information, the seismic attribute data of the certain seismic trace point location are used as inputs, and the logging high-frequency sequence stratigraphy data of the point location are used as sample labels for training. As is known, for a certain seismic trace point location, in order to serve as input data for the sequence prediction neural network, seismic attribute data of each horizon of the seismic trace point location that are determined through top and bottom surfaces of seismic data are needed to jointly constitute a seismic attribute sequence. The seismic attribute sequence is then used as an input sequence for the sequence prediction neural network. To use the logging high-frequency sequence stratigraphy data of the seismic trace point location as the sample labels for training, each piece of stratigraphy information in the logging high-frequency sequence stratigraphy data of the seismic trace point location is needed to jointly constitute sequence data. For example, one encoded value may be assigned to each horizon in the logging high-frequency sequence stratigraphy data, and a sequence composed of all encoded values serves as a sample label. Exemplarily, in one specific embodiment, stratum numbers of the target block may be encoded as 1, 2, 3, 4, and 5, for a total of five horizons.

Correspondingly, for example, in one or more specific embodiments, inputting the depth-information-associated seismic attribute data of the determined seismic trace point location into the sequence stratigraphy prediction model in the current state, so as to obtain the high-frequency sequence stratigraphy data of the determined seismic trace point location specifically includes the following implementation steps: determining, according to the sequential path, the determined seismic trace point location, on which a high-frequency sequence stratigraphy prediction is to be performed, on the well-tie seismic trace of the known conditioning well in the target block; determining stratigraphy information of the determined seismic trace point location according to stratum top and bottom surface information learned from seismic data of the target block; forming a seismic attribute sequence from seismic attribute data corresponding to each horizon in the determined seismic trace point location; and associating and then inputting the seismic attribute sequence with depth information of each horizon in the determined seismic trace point location into the sequence stratigraphy prediction model in the current state, so as to obtain the high-frequency sequence stratigraphy data of the determined seismic trace point location.

Exemplarily, in one or more specific embodiments, using the initial-state sequential simulation condition data to construct the learning sample to train the initial sequence prediction neural network, and then obtaining the sequence stratigraphy prediction model in the initial state specifically includes the following implementation steps: encoding each stratum in the logging high-frequency sequence stratigraphy data of the well-point seismic trace of the known conditioning well in the target block to obtain a stratum encoded sequence for each point location on the well-point seismic trace of the known conditioning well, and using the stratum encoded sequence for each point location as a sample label for seismic attribute data of each point location in a one-to-one correspondence; and training the initial sequence prediction neural network using the seismic attribute data of each point location on the well-point seismic trace of the known conditioning well and the sample label corresponding to each seismic attribute datum, and obtaining the sequence stratigraphy prediction model in the initial state after training is completed.

Exemplarily, in one or more specific embodiments, during associating and then inputting the seismic attribute sequence with the depth information of each corresponding horizon in the determined seismic trace point location into the sequence stratigraphy prediction model in the current state, a planar position code for the seismic trace point location is further embedded in the seismic attribute sequence for the determined seismic trace point location.

It needs to be understood that, for a certain seismic trace point location, seismic attribute data serving as input data for the initial sequence prediction neural network are a seismic attribute sequence composed of seismic attributes of each horizon of the seismic trace point location. By embedding the planar position code of the seismic trace point location in the seismic attribute sequence, the sensitivity of the sequence prediction neural network to a position of each element in the seismic attribute sequence is enhanced, which in turn improves the robustness of a network. For example, the planar position code may be (XLINE, INLINE) coordinates corresponding to the seismic trace point location on the plane, such as (633, 784). A new coordinate system may also be established according to requirements of the target block, for example, when the target block has high precision requirements for the high-frequency sequence and a current coordinate system cannot satisfy the requirements.

Step S200, whether high-frequency sequence stratigraphy data of any seismic trace point location in the target block are not obtained is judged, if yes, the high-frequency sequence stratigraphy data of the determined seismic trace point location obtained in step S100 are added to sequential simulation condition data to update the sequential simulation condition data, updated sequential simulation condition data are used to construct a learning sample to train the sequence stratigraphy prediction model in the current state, so as to obtain a trained sequence stratigraphy prediction model, then step S100 is performed to perform a high-frequency sequence stratigraphy prediction on a next determined seismic trace point location determined according to the sequential path, and if not, a high-frequency sequence stratigraphy prediction for the target block is completed.

Exemplarily, in one or more specific embodiments, adding the high-frequency sequence stratigraphy data of the determined seismic trace point location obtained in step S100 to the sequential simulation condition data to update the sequential simulation condition data specifically includes the following implementation steps: establishing a correspondence between the high-frequency sequence stratigraphy data of the determined seismic trace point location obtained in step S100 and the seismic attribute data; and adding, to the sequential simulation condition data, the seismic attribute data and the high-frequency sequence stratigraphy data of the determined node between which the correspondence is established, so as to update the sequential simulation condition data, wherein the updated sequential simulation condition data include the seismic attribute data and the high-frequency sequence stratigraphy data between which the correspondence is established, as well as the seismic attribute data in the target block for which no corresponding high-frequency sequence stratigraphy data are obtained.

Exemplarily, in one or more specific embodiments, the sequence prediction neural network is a sequence prediction neural network with a conditional random field (CRF) layer added. As is known, the sequence prediction neural network with the CRF layer added refers to an end-to-end sequence horizon prediction model established by passing an output to the CRF layer for global optimization and annotation after feature extraction via the sequence prediction neural network. The CRF layer is an undirected graph network capable of achieving annotation or classification of sequence data. The CRF layer can consider relationships between adjacent sample points and use these associations as constraints for sequence horizon predictions, thereby improving the accuracy of sequence predictions, avoiding the generation of unreasonable predictions, and preventing the occurrence of disorder in sequence predictions, so that prediction results for sequence horizons better conform to geological rules. As is known, the constraints on the CRF layer are typically implemented by defining characteristic functions, through which restrictions are imposed on output sequences obtained after feature extraction via the sequence prediction neural network. Each restriction corresponds to one characteristic function. For example, if a stratum sequence consists of 5 sub-layers in total, by defining one characteristic function, it is ensured that the output sequence obtained through the prediction by the sequence prediction neural network includes all 5 layers. This characteristic function may check whether the output sequence obtained through the prediction includes five labels: 1, 2, 3, 4, and 5. If not all the labels are included, a score of the model is penalized. For another example, the stratum sequence shall not exhibit any phenomenon of stratum crossing or stratum missing. By defining another characteristic function, it is ensured that the output sequence obtained through the prediction conforms to the law of gradual increase. For example, by defining one characteristic function, whether layer number codes of two adjacent layers conform to the above law is checked. For example, there should be no unreasonable phenomena from Layer 1 to Layer 3 or from Layer 3 to Layer 2; and only incremental cases from Layer 1 to Layer 2 or from Layer 2 to Layer 3 can occur. When the CRF layer is trained, the characteristic functions defined above are added to the sequence horizon prediction model, and weights of these characteristic functions are adjusted through training. It needs to be noted that the performance of the CRF layer is influenced by characteristic selection. Therefore, appropriate characteristic functions need to be designed in conjunction with specific prediction requirements for the target block and characteristics of the sequential simulation condition data. This embodiment does not provide a detailed description of the characteristic functions specifically involved.

In one specific application, for example, after adding the characteristic functions to the sequence horizon prediction model and after training, the probability of transferring from Layer 2 to Layer 1 is set to 0, the probability of transferring from Layer 1 to Layer 3 is set to 0, and so on. Each layer has a transfer score for representing the magnitude of the likelihood of transferring from a current layer to another layer. The transfer scores may help the prediction model based on the sequence prediction neural network better understand relationships between the horizons, thereby improving the performance of the prediction model based on the sequence prediction neural network in tasks such as seismic sequence annotation.

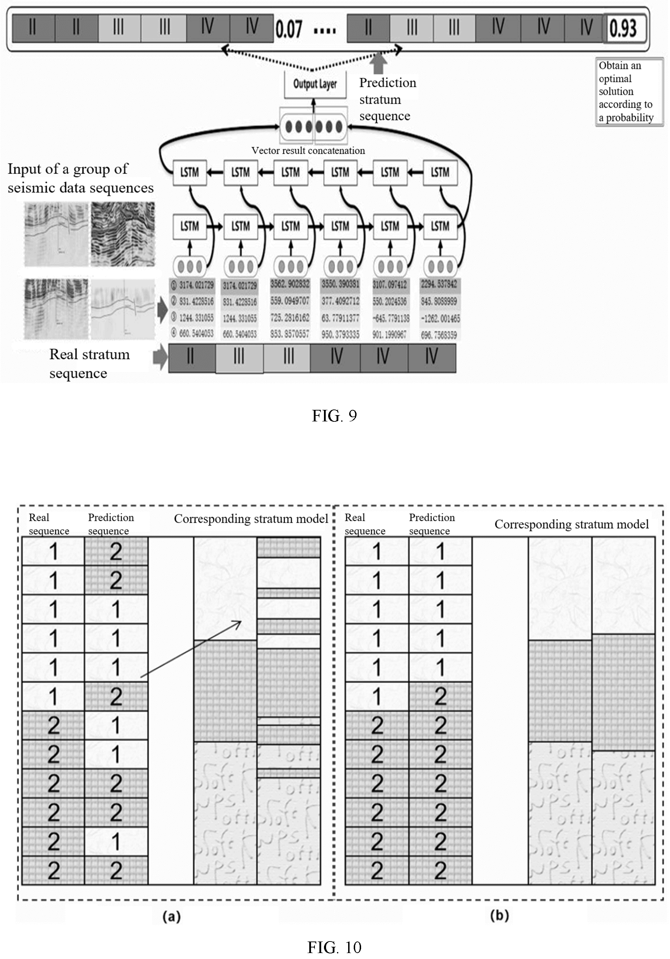

In one comparative example, the sequence prediction neural network is a sequence prediction neural network without a CRF layer added. As shown in FIG. 10., prediction results from the sequence horizon prediction model without the CRF layer added exhibit a layer crossing phenomenon, whereas prediction results from the sequence horizon prediction model with the CRF layer added do not exhibit layer missing and layer crossing phenomena.

As can be seen from this, in the above embodiment, by introducing the CRF layer into the sequence prediction neural network, the prediction precision for high-frequency sequence horizons is improved, which in turn improves the accuracy of interpretation of the seismic high-frequency sequence using a small amount of logging information.

Exemplarily, in one or more specific embodiments, the sequence prediction neural network includes a bidirectional long short-term memory network (BiLSTM network) and a CRF layer connected sequentially. The BiLSTM network is formed by combining a forward LSTM and a backward LSTM. The forward LSTM processes the seismic attribute sequence in a forward direction, while the backward LSTM processes the seismic attribute sequence in a backward direction. After processing, outputs of the two LSTMs are concatenated. Thus, contextual information of the seismic attribute sequence is fully used, seismic data characteristics are effectively extracted, and a relationship between the stratum encoded sequence and the seismic attribute sequence before and after changes is better found and used.

It may be known that although the above embodiment mentions the BiLSTM network as a preferred core network for the sequence horizon prediction model, this is not used as a limitation on the sequence horizon prediction model. In applications, an appropriate sequence prediction neural network needs to be selected in conjunction with specific scenario conditions. For example, considering a computational capability, etc. of a device, other sequence prediction neural networks with lower requirements for the computational capability of the device may be selected, or a known public sequence prediction neural network undergoes network modifications and then achieves prediction precision equivalent to or better than that of the BiLSTM network. The embodiment of the present invention cannot exhaustively describe various sequence prediction neural networks that may be applied to the present invention. However, it may be at least known by those of ordinary skill in the art that the applicability of commonly used sequence prediction neural networks, such as an RNN and an LSTM, to the present invention cannot be excluded.

As in the above embodiment, the sequence prediction neural network is formed by combining the BiLSTM network with the CRF layer. The prediction of the high-frequency sequence stratigraphy data performed using this network possesses high precision, meeting the requirements for interpretation of seismic high-frequency sequences in early-stage onshore exploration blocks and offshore few-well blocks.

Exemplarily, in one or more specific embodiments, after the high-frequency sequence stratigraphy data of the determined seismic trace point location are obtained through the prediction, high-frequency sequence stratigraphy data of a well point of the known conditioning well are used to perform a geological reasonability judgment on the high-frequency sequence stratigraphy data of the determined seismic trace point location, and if the high-frequency sequence stratigraphy data of the determined seismic trace point location are unreasonable, the high-frequency sequence stratigraphy data of the determined seismic trace point location are corrected.

As in the above embodiment, by comparing with the high-frequency sequence stratigraphy data of the well point of the known conditioning well, whether the predicted high-frequency sequence stratigraphy data are reasonable is judged. For example, the geological reasonability judgment includes a stratum sequence reasonability judgment and a stratum thickness reasonability judgment. By comparing predicted high-frequency sequence stratigraphy data of a seismic trace point location near a well perimeter position of a conditional well with high-frequency sequence stratigraphy data of the seismic trace at a well point of the conditional well, if there is a significant difference in horizon proportions or an unreasonable sequence prediction phenomenon, at this point, it may be determined that the predicted high-frequency sequence stratigraphy data are unreasonable, and the high-frequency sequence stratigraphy data of the determined seismic trace point location need to be corrected.

Exemplarily, in one or more specific embodiments, correction approaches may be as follows: correction through human assistance; or correction by adjusting the constraint on the CRF layer. Specifically, a specific process of performing the correction through human assistance includes: generating, according to an unreasonable sequence of the determined seismic trace point location reflected by the high-frequency sequence stratigraphy data of the determined seismic trace point location and the high-frequency sequence stratigraphy data of the well point of the known conditioning well, a correction instruction for manually correcting the unreasonable sequence. A specific process of performing the correction by adjusting the constraint on the CRF layer includes: generating, according to the unreasonable sequence of the determined seismic trace point location reflected by the high-frequency sequence stratigraphy data of the determined seismic trace point location and the high-frequency sequence stratigraphy data of the well point of the known conditioning well, a correction instruction for adjusting the constraint on the CRF layer, updating the sequence stratigraphy prediction model based on an adjusted constraint on the CRF layer, and inputting the depth-information-associated seismic attribute data of the determined seismic trace point location into an updated sequence stratigraphy prediction model, so as to obtain corrected high-frequency sequence stratigraphy data of the determined seismic trace point location.

For example, during the stratum sequence reasonability judgment, whether a phenomenon of layer crossing or layer missing occurs, and whether the sequence begins at specified Sub-layer 1 and ends at Sub-layer 5 are judged. If any of the above cases occurs, an unreasonable high-frequency sequence stratigraphy prediction result needs to be manually corrected. For example, a sequence code for a crossed layer or a missed layer corresponding to the seismic trace point location is corrected, so that a reliable learning sample is provided for a next round of model learning. For another example, during the stratum thickness reasonability judgment, if there is a significant difference in thickness of the same sub-layer between adjacent seismic traces, it is necessary to consider the geological characteristics of the target block in the position, such as whether a fault line is present. If no fault line is present, the thickness needs to be manually corrected to a reasonable range.

As in the above embodiment, by performing the geological reasonability judgment and correction on the predicted high-frequency sequence stratigraphy data, the prediction precision of the sequence horizon prediction model for the seismic high-frequency sequence stratigraphy data is improved, and thus the accuracy of interpretation of the seismic high-frequency sequence based on a small amount of logging information is improved.

Exemplarily, in one or more specific embodiments, a seismic trace point location predicted by the sequence stratigraphy prediction model in each state is limited to a circular area centered on a point on the sequential path, and if an overlap area exists between circular areas, a subsequently predicted seismic trace point location in a circular area does not include a seismic trace point location in the overlap area. Preferably, each circular area has the same radius.

As an improvement to the above embodiment, an information basic source is introduced in the following specific embodiments. That is, high-frequency sequence stratigraphy data and seismic attribute data of a point location on a well-point seismic trace of the known conditioning well are used as the information basic sources. Regardless of how a center of a prediction range (circular area) of the sequence stratigraphy prediction model changes, the information basic sources are always used to construct a learning sample. That is, the information basic sources always serve as sample points in the learning sample. As in the above embodiment, since the information basic sources represent the most reliable high-frequency sequence stratigraphy information, the prediction accuracy of the sequence horizon prediction model is improved by consistently using the most reliable high-frequency sequence stratigraphy information as the sample points for the learning sample.

### Embodiment 2

An embodiment of the present invention provides a method for intelligent interpretation of a seismic high-frequency sequence using logging information, which differs from Embodiment 1 in that, after step S200, the method further includes the following step.

Step S300, a high-frequency sequence division result for the target block is obtained by using a constructed classification model to perform sequence classification on the high-frequency sequence stratigraphy data.

For example, if a high-frequency sequence division rule has been defined by the position of the known conditioning well and has been used to perform high-frequency sequence division on the well-point seismic trace, then the high-frequency sequence division rule may be used to perform high-frequency sequence division on other high-frequency sequence stratigraphy data in the target block. At this point, sequence types defined by the high-frequency sequence division rule may be used as sequence classification types for the classification model.

In one comparative example, after the high-frequency sequence stratigraphy data of each point location in the target block are obtained, these high-frequency sequence stratigraphy data may be interpreted manually to obtain the high-frequency sequence division results for the target block. However, the efficiency and accuracy of human-based high-frequency sequence division are significantly lower than those of high-frequency sequence division based on the classification model. Clearly, using the constructed classification model to perform sequence classification on the high-frequency sequence stratigraphy data takes into account both high efficiency and high accuracy.

Exemplarily, in one or more specific embodiments, the classification model is a Softmax classifier. The Softmax classifier is a typical classifier capable of completing a plurality of classification tasks. It needs to be understood that while the above statement mentions using the Softmax classifier as the classification model, this is not intended to limit the classification model. In applications, appropriate classification models need to be selected in combination with specific scenario conditions. The embodiment of the present invention cannot exhaustively describe various classification models that may be applied to the present invention. However, it may be at least known by those of ordinary skill in the art that the applicability of commonly used classification models, such as an SVM and a Bayesian classifier, to the present invention cannot be excluded.

### Embodiment 3

The embodiment of the present invention is an application example of above Embodiment 2. In conjunction with a technical roadmap shown in FIG. 2, a method for intelligent interpretation of a seismic high-frequency sequence using logging information provided by an embodiment of the present invention includes the following implementation steps.

Step SS1: high-frequency sequence stratigraphy data, learned through logging data, of the well-point seismic trace of the known conditioning well in the target block, planar position information of the target block, and planar position information of the known conditioning well are used to establish a condition information base for storing sequential simulation condition data, a planar position of the known conditioning well is encoded and stored in the condition information base, and top and bottom surface information of the target block learned according to seismic data is read into the condition information base.

Step SS2: seismic attribute data are extracted from an SEGY-format seismic data volume, depth-domain seismic attribute data are optimized according to differences in sensitivity to high-frequency stratigraphy, then seismic attribute data of the well-tie seismic trace of the known conditioning well are extracted, and these seismic attribute data are stored in the condition information base.

Step SS3: classification and extraction are performed on the data in the condition information base, logging high-frequency sequence stratigraphy data of the well-point seismic trace of the known conditioning well are passed to seismic attribute data at the same depth, a correspondence and encoding between the seismic attribute data and the high-frequency sequence stratigraphy data of the well-point seismic trace of the known conditioning well are completed, sample labels are set according to the correspondence between the high-frequency sequence stratigraphy data and the seismic attribute data of the known conditioning well, and a normalized mathematical operation is performed after sample data are screened. Since specific values of the seismic attribute data are relatively discrete when the seismic attribute data are used as sample data, to improve the subsequent training efficiency of the sequence prediction neural network, the seismic attribute data are normalized.

Step SS4: characteristics of the sample data are learnt around the high-frequency sequence stratigraphy data and planar position encoding information of the known conditioning well, a BiLSTM+CRF neural network model (referring to the sequence prediction neural network composed of the BiLSTM network and the CRF layer connected to the output end of the BiLSTM network in the above embodiment) is established, for a high-frequency sequence stratigraphy problem, learning training is performed on the BiLSTM+CRF neural network model to ensure a high self-test accuracy rate for the learning sample, a sequence horizon prediction model in an initial state is obtained, and then the sequence horizon prediction model containing weight value information between various network nodes after learning training isstored.

Step SS5: according to the data in the condition information base, seismic attribute data of the point location (referred to as a sample point to be predicted), on which a high-frequency sequence stratigraphy prediction is to be performed, on the well-tie seismic trace of the conditional well are acquired, the sequence horizon prediction model after completion of learning training is used to predict high-frequency sequence stratigraphy for the sample point, and a prediction result is evaluated and corrected in conjunction with the high-frequency sequence stratigraphy information of the well point of the known conditioning well, to satisfy reasonability in the geological sense, that is, to reach the standard of reasonability in the geological sense for the high-frequency sequence stratigraphy of the well-tie seismic trace of the known conditioning well, so that the prediction of high-frequency sequence stratigraphy for seismic attributes of adjacent locations of limited conditioning wells is completed.

Step SS6, the predicted high-frequency sequence stratigraphy data and location information for the adjacent location of the known conditioning well are recorded and imported into the condition information base, a condition content and structure in the condition information base are updated, the expanded condition information base is used to update the learning sample, thereby achieving a goal of synchronous updating and expansion of the learning sample, the sequence horizon prediction model after the learning sample is updated performs predictions on other sample points on a seismic trace adjacent to the known conditioning well according to a sequential path, prediction results are corrected, and through "learning-predicting-correcting-updating-learning" operations, cyclic updates of the condition information base and sequential expansion of the learning sample are achieved.

The range of sample points predicted by the sequence horizon prediction model in each state is a circular area centered on a point on the sequential path. The sequential prediction principle described in step SS6 above is as follows.

Assuming that coordinates of an initial sample point are represented as (x₀,y₀), and that corresponding stratum stratigraphy information S and depth information D of the seismic trace are available, then according to a predefined radius R of the circular area, the range of sample points predicted by the sequence horizon prediction model in the initial state may be obtained and referred to as an initial circular area.

Assuming that a function expression of the sequence horizon prediction model is f_{θ}(*K, S, D*)*,* where θ represents a parameter of the neural network, K represents seismic attribute data of the initial sample point, then a prediction result for the initial circular area may be represented as: S_{pred}(x, y)=*f_{θ}*(*K, S, D*) · I(x, y), I(x, y) is an indicator function and used to represent whether a point (x, y) is within the initial circular area, and $I \left(x, y\right) = \left\{\begin{matrix}1 , if {\left(x-{x}_{0}\right)}^{2} + {\left(y-{y}_{0}\right)}^{2} \leq {R}^{2} \\ 0 , otherwise\end{matrix}\right.$;

To predict a new circular area in the target block, a circle center (x₀,y₀) is translated according to the sequential path. Assuming a translation vector is represented as (Δx,Δy), coordinates of a center of the new circular area are represented as (x₀ +Δx, y₀ +Δy).

A prediction of high-frequency sequence stratigraphy is performed on a sample point in the new circular area that has not been predicted. A prediction result for the new circular area may be represented as: S_{pred} (x', y')=f_{θ}(K, S, D) · I(x', y'), where I(x', y') represents whether a point ( x', y' ) is in the new circular area, and $I \left(x′, y′\right) = \left\{\begin{matrix}1 , if {\left(x′-{x}_{0}-Δx\right)}^{2} + {\left(y′-{y}_{0}-Δy\right)}^{2} \leq {R}^{2} \\ 0 , otherwise\end{matrix}\right.$ .

In addition, it needs to be understood that, in practical applications, inputs for the sequence horizon prediction model may further include more other characteristic parameters. For example, when the influence of lithofacies on the high-frequency sequence is considered, the lithofacies are used as inputs for the sequence horizon prediction model. Furthermore, in practical applications, it may be necessary to consider boundary conditions and update strategies of prediction results. The boundary conditions refer to a boundary and overall shape of the target block; and the boundary conditions may affect the rules for the sequential prediction. For example, if the boundary is highly irregular, operations such as reducing the circular area where the learning sample and a prediction sample point are located may be adopted. Furthermore, to obtain a next round of learning samples, after a current prediction result is used to update the condition information base, the strategy for updating the current learning sample is adjusted according to changes in the shape of the target block. At the same time, the selection of a learning sample capacity, a prediction step size, and the radius of a circular area needs to be determined according to the size of the target block and computing power of a computer, so as to reduce the learning sample capacity and increase the prediction step size while ensuring prediction precision as much as possible, and thus the occupation of computing resources is reduced.

Step SS7: by analyzing data of high-frequency sequence division of the known conditioning well in the target block, high-frequency sequence division rules are determined to obtain category types of high-frequency sequences, a classification model for classifying high-frequency sequence stratigraphy information is designed according to the category types of the high-frequency sequences, and the classification model is then used to perform sequence classification on the high-frequency sequence stratigraphy information of each point location in the target block, thereby obtaining high-frequency sequence division results for the target block.

A Softmax classifier is used as the classification model. In addition, a construction principle for the Softmax classifier may be implemented in conjunction with the process in the common embodiment, which will not be repeated here.

### Embodiment 4

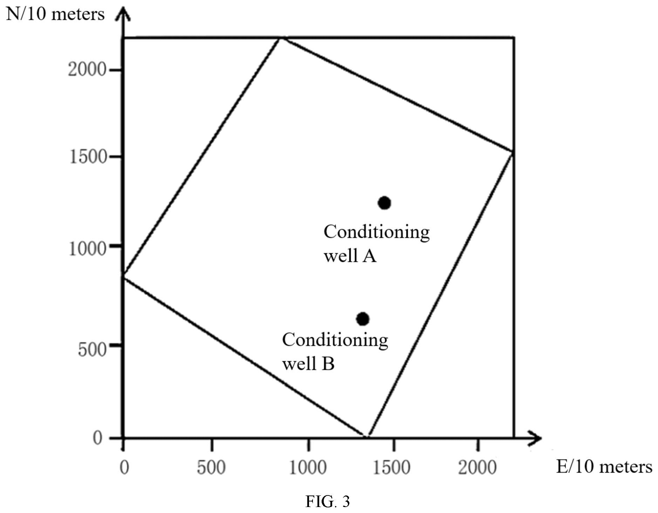

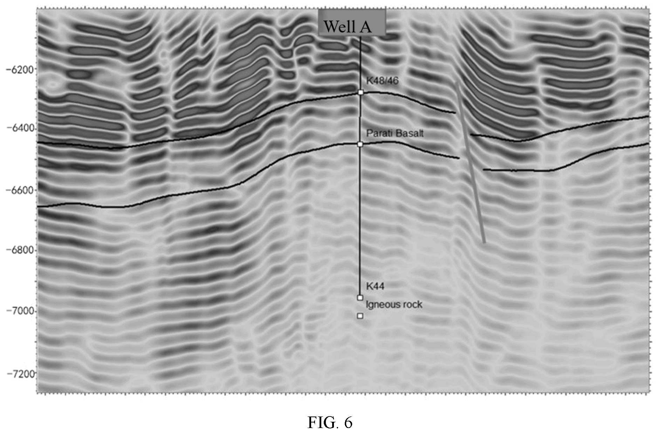

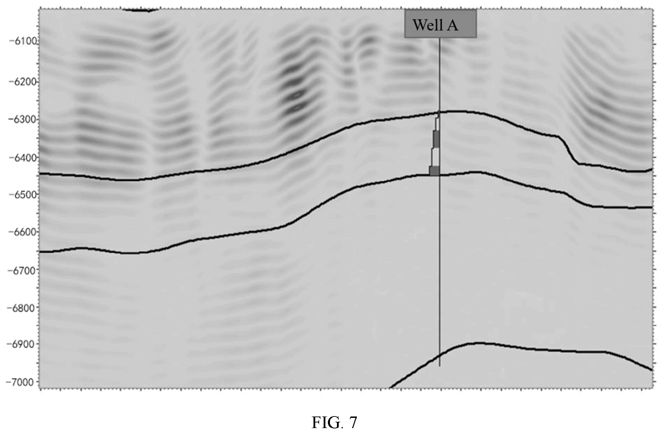

The embodiment of the present invention is a specific application of above Embodiment 3 in a few-well block (hereinafter referred to as a "target prediction block") in a certain offshore area overseas. As shown in FIGS. 3 to 14, in this application, a method for interpretation of seismic high-frequency sequence stratigraphy using logging information includes the following specific steps.

Step A1, by analyzing data of the target prediction block, planar position data of each seismic trace in the target prediction block are acquired, virtual coordinate axes are established in a computer, the shape of the target prediction block is reproduced, coordinates of two known conditioning wells (conditioning well A and conditioning well B) in the target prediction block are calibrated and encoded simultaneously, and the shape of the target prediction block and the locations of the conditioning wells are shown in FIG. 3. High-frequency sequence stratigraphy data of the two conditioning wells are stored. A condition information base is established, and the above data are stored in. At the same time, top and bottom surface data of the target prediction block in a vertical direction are stored into the condition information base for later use. Reading of information in different seismic attribute data volumes (SEGY format files) includes: extracting seismic trace data and reading their (X, Y, Z) coordinates; reading in of needed seismic attribute data volumes; and converting seismic attribute coordinates according to coordinates read from seismic traces, and converting an (X,Y) series of seismic attributes into an (XLINE, INLINE) series in the seismic volumes.

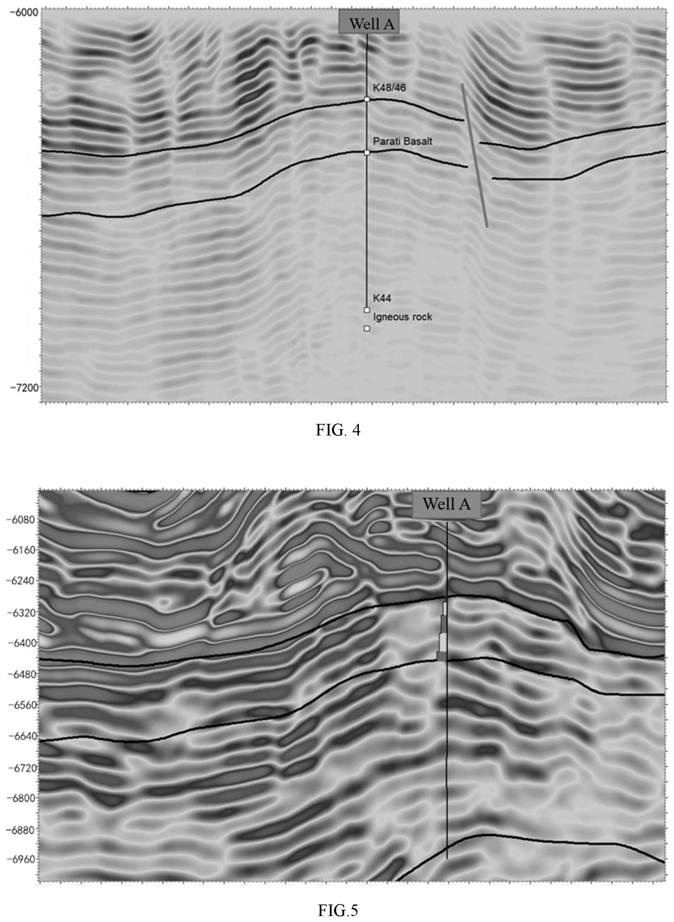

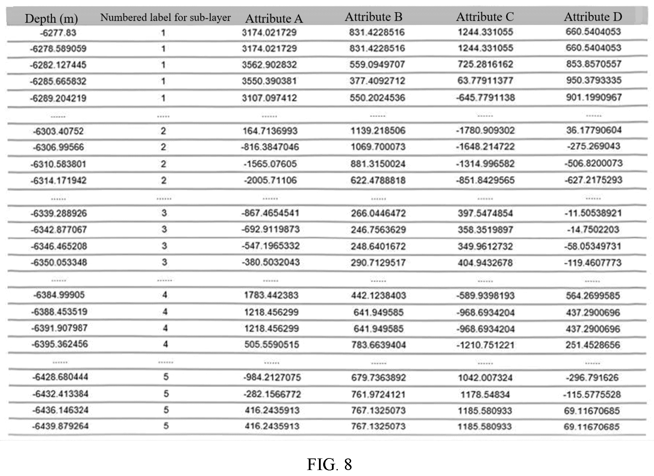

Step A2, a correlation analysis method is used to perform optimal selection on more than ten alternative seismic attributes, and in conjunction with on-well seismic profiles, four seismic attributes are comprehensively selected as the basis for stratigraphy prediction of high-frequency sequences. The four seismic attributes optimally selected are as shown in FIGS. 4 to 7. The four seismic attributes are respectively: quadrature amplitude (Quar), trace AGC (TAGC), relative acoustic impedance (RAI), and RMS amplitude (RMS). At the same time, a depth relationship between a ground elevation in the seismic attribute data and a wellbore elevation from logging is balanced. Processed seismic attribute data are stored in the condition information base to provide data support for the learning samples of the neural network model. At this point, the condition information base contains planar position data and seismic attribute data of each seismic trace sample, as well as depth and location data of top and bottom surfaces where all seismic traces in the target prediction block are located. A correspondence is established between the high-frequency sequence stratigraphy data of the well-point seismic trace of the conditioning well and the extracted seismic attribute data. Different strata are numbered. According to the existing high-frequency sequence stratigraphy information and the depth information of the sample points, the horizon corresponding to each sample point is encoded to obtain a horizon encoded sequence. This horizon encoded sequence serves as the sample label for the corresponding sample point. Five strata of the target prediction block are encoded as 1, 2, 3, 4, and 5, and horizon labels are set as shown in FIG. 8. In FIG. 8, sub-layers of the strata of the target prediction block are encoded as 1, 2, 3, 4, and 5 respectively, and attributes A to D represent four types of seismic attributes. Because values of the extracted seismic attributes are highly discrete in horizontal coordinates, to enable the sequence horizon prediction model to better extract an intrinsic relationship between the seismic attributes and the high-frequency sequence stratigraphy data, the values of the seismic attributes are normalized.

Step A3, based on characteristics of the high-frequency sequence stratigraphy data and the seismic attribute data of the known conditioning well, a BiLSTM+CRF-based initial sequence prediction neural network is established. By training the BiLSTM+CRF-based initial sequence prediction neural network through learning samples, a sequence horizon prediction model in an initial state is obtained. An operation example of this model is shown in FIG. 9. The sequence horizon prediction model is stored in a root directory of program files in a h5 format, so it can be directly called upon the next time the model is used to predict new data.

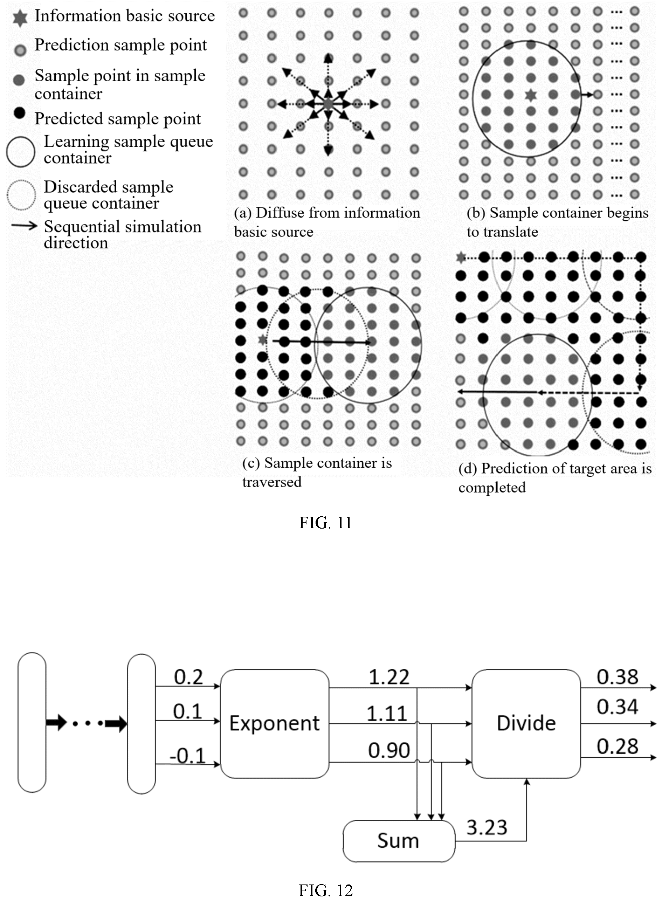

Step A4, according to top and bottom surface data in the condition information base, top and bottom surface data of a seismic trace near the known conditioning well are searched for and acquired. Based on top and bottom surface information of the seismic trace in the top and bottom surface data and location data of the seismic trace, seismic attribute data between top and bottom surfaces of a target seismic trace in different seismic attribute data volumes are extracted. Seismic attribute data of each point location on the seismic trace and depth information of each point location are used as input data for the sequence horizon prediction model. The above stored sequence horizon prediction model is used to perform a high-frequency sequence stratigraphy prediction on the point location on the seismic trace near the conditioning well. Prediction results are compared with the high-frequency sequence stratigraphy data of the well-point seismic trace of the known conditioning well and are analyzed, and whether the prediction results are ideal is evaluated according to the high-frequency sequence stratigraphy data of the well-point seismic trace of the known conditioning well. Through the comparison, if it is found that there is a significant difference in the horizon proportion of high-frequency sequences between the prediction result of the seismic trace near the known conditioning well and the high-frequency sequence stratigraphy data at the well point of the conditioning well, or if there is a phenomenon of an unreasonable sequence prediction, a manual correction is needed or the constraints on the CRF layer need to be adjusted to reach a standard basically consistent with the high-frequency sequence stratigraphy information of the well-tie seismic trace of the known conditioning well. Corrected prediction results for the high-frequency sequence stratigraphy of seismic attributes of the adjacent location of the conditioning well, as well as location information corresponding to the prediction results are imported into the condition information base in the format required by the condition information base. The information newly imported into the condition information base is updated into the learning samples of the sequence horizon prediction model to establish more correspondences between the seismic attributes and the high-frequency sequence stratigraphy information, so as to better predict a high-frequency sequence stratigraphy status of the next adjacent seismic trace until the prediction results for high-frequency sequence stratigraphy of all selected adjacent seismic traces in a preliminarily defined prediction range, as well as their corresponding location information, are all imported into the condition information base. It is important to note that the selection of the capacity for the condition information base depends on the size of the radius of the defined prediction range (the radius of the circular area), the size of the target prediction block, and the computing power of the computer. The selection of the sample point to be predicted depends on the size of the target prediction block, the density of sample seismic traces required to reach the structural level, and the computing power of the computer. Subsequently gradually added conditions are executed sequentially according to the above procedure. A range of the sample points to be predicted is defined in a certain area or direction. According to established rules, the range of the sample points to be predicted is shifted on the target prediction block. The prediction operations for high-frequency sequence stratigraphy of seismic attributes of locations of seismic traces adjacent to the known conditioning well are repeated and cycled until the prediction operations traverse the entire target prediction block. At this point, selected seismic traces in the entire target prediction block all experience the prediction process, and ultimately conditional cyclic updating of seismic high-frequency sequence stratigraphy information and the step-by-step sequential expansion of the learning samples are achieved. Furthermore, in sequential simulation, an information basic source is defined. The information basic source serves as a persistent and fixed sample point in the learning samples, and regardless of the location of the circle center where the radius of the prediction range lies, the information basic source always acts as a sample point in the learning samples. The prediction process is shown in FIG. 11. In FIG. 11, a learning sample queue container shown contains sample points of a current learning sample, and a discarded sample queue container contains discarded sample points. Sample points in an overlap area between the learning sample queue container and the discarded sample queue container are counted into sample points of the current learning sample.

Step A5, based on a high-frequency sequence division structure of the known conditioning well in the target prediction block, a Softmax classification network is selected to construct a classification model, to obtain a Softmax classifier suitable for this target prediction block. The operating principle of the Softmax classifier is shown in FIG. 12.

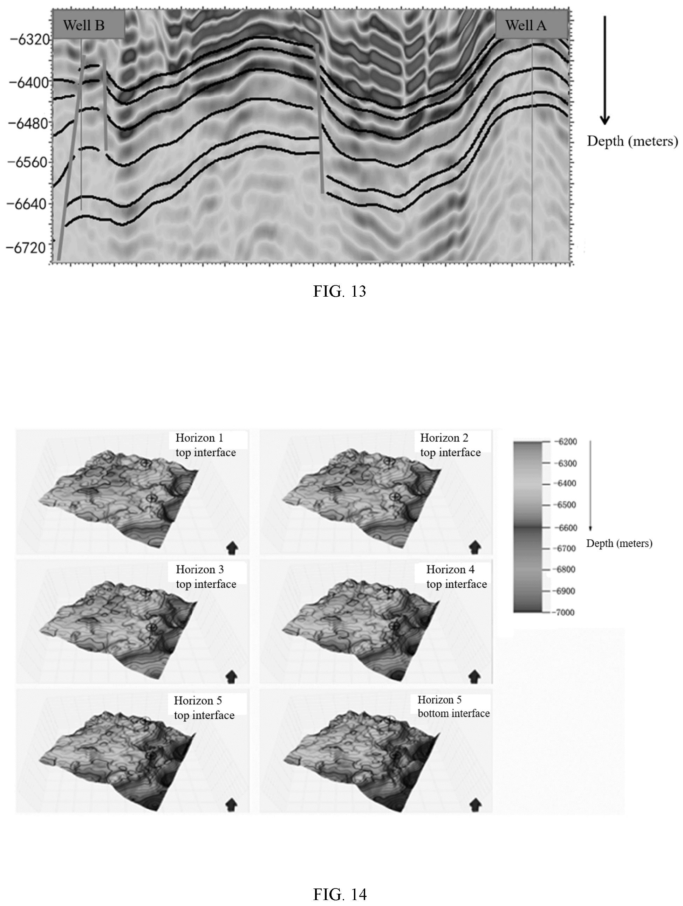

Through the above steps, intelligent interpretation for the seismic high-frequency sequences in the few-well target prediction blocks is achieved using a small amount of logging high-frequency sequence information. FIG. 13 is a seismic profile for tracking and identifying five short-term cyclic sequences in the range of a target prediction block. FIG. 14 is a plan view of six stratigraphic interfaces from top to bottom. Furthermore, the intelligent interpretation of the high-frequency sequences in the target prediction block achieved through the above steps takes only tens of hours, whereas high-frequency sequence interpretation of a target prediction block of nearly 500 km² in three dimensions with 6 longitudinal sub-layer interfaces using a traditional manual seismic horizon tracking method takes at least several months. As can be seen, the method for intelligent interpretation of the seismic high-frequency sequence using the logging information implemented in the embodiments of the present invention significantly improves interpretation efficiency, shortens a project research cycle, reduces an interpretation cost, and effectively saves human resources.

### Embodiment 5

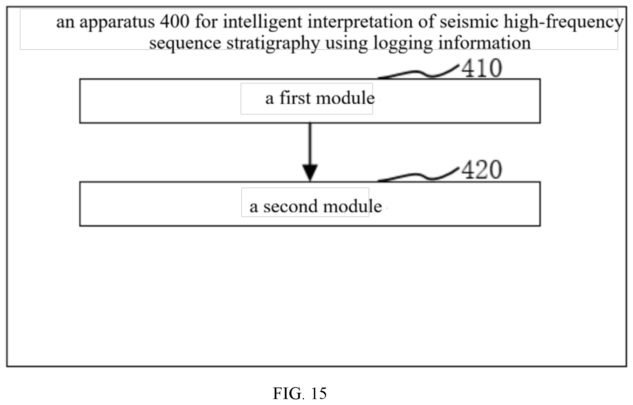

Referring to FIG. 15, based on the various method embodiments above, an embodiment of the present invention further provides an apparatus 400 for intelligent interpretation of seismic high-frequency sequence stratigraphy using logging information, including a first module 410 and a second module 420.

The first module 410 is configured to input, into a sequence stratigraphy prediction model in a current state, depth-information-associated seismic attribute data of a determined seismic trace point location, which is determined according to a sequential path, on a well-tie seismic trace of a known conditioning well in a target block, so as to obtain high-frequency sequence stratigraphy data of the determined seismic trace point location. The second module 420 is configured to judge whether high-frequency sequence stratigraphy data of any seismic trace point location in the target block are not obtained, add, if yes, the high-frequency sequence stratigraphy data of the determined seismic trace point location to sequential simulation condition data to update the sequential simulation condition data, use updated sequential simulation condition data to construct a learning sample to train the sequence stratigraphy prediction model in the current state, so as to obtain a trained sequence stratigraphy prediction model, so that the first module performs a high-frequency sequence stratigraphy prediction on a next determined seismic trace point location determined according to the sequential path, and complete, if not, a high-frequency sequence stratigraphy prediction for the target block.

Initial-state sequential simulation condition data are used to construct a learning sample to train an initial sequence prediction neural network, then the sequence stratigraphy prediction model in an initial state is obtained, and the initial-state sequential simulation condition data include logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

In a specific embodiment, inputting the depth-information-associated seismic attribute data of the determined seismic trace point location into the sequence stratigraphy prediction model in the current state, so as to obtain the high-frequency sequence stratigraphy data of the determined seismic trace point location includes: determining, according to the sequential path, the determined seismic trace point location, on which a high-frequency sequence stratigraphy prediction is to be performed, on the well-tie seismic trace of the conditional well in the target block; determining stratigraphy information of the determined seismic trace point location according to stratum top and bottom surface information learned from seismic data of the target block; forming a seismic attribute sequence from seismic attribute data corresponding to each horizon in the determined seismic trace point location; and associating and then inputting the seismic attribute sequence with depth information of each horizon in the determined seismic trace point location into the sequence stratigraphy prediction model in the current state, so as to obtain the high-frequency sequence stratigraphy data of the determined seismic trace point location.

In a specific embodiment, adding the high-frequency sequence stratigraphy data of the determined seismic trace point location to the sequential simulation condition data to update the sequential simulation condition data includes: establishing a correspondence between the seismic attribute data and the high-frequency sequence stratigraphy data of the determined seismic trace point location; and adding, to the sequential simulation condition data, the seismic attribute data and the high-frequency sequence stratigraphy data of the determined seismic trace point location between which the correspondence is established, so as to update the sequential simulation condition data, wherein the updated sequential simulation condition data include the seismic attribute data and the high-frequency sequence stratigraphy data between which the correspondence is established, as well as the seismic attribute data in the target block for which no corresponding high-frequency sequence stratigraphy data are obtained.

In a specific embodiment, using the initial-state sequential simulation condition data to construct the learning sample to train the initial sequence prediction neural network, and then obtaining the sequence stratigraphy prediction model in the initial state includes: encoding each stratum in the logging high-frequency sequence stratigraphy data of the well-point seismic trace of the conditional well in the target block to obtain a stratum encoded sequence for each point location on the well-point seismic trace of the conditional well, and using the stratum encoded sequence for each point location as a sample label for seismic attribute data of each point location in a one-to-one correspondence; and training the initial sequence prediction neural network using the seismic attribute data of each point location on the well-point seismic trace of the conditional well and the sample label corresponding to each seismic attribute datum, and obtaining the sequence stratigraphy prediction model in the initial state after training is completed.

In a specific embodiment, when the initial sequence prediction neural network is trained using the seismic attribute data of each point location on the well-point seismic trace of the known conditioning well and the sample label corresponding to each seismic attribute datum, a planar position code for each point location is embedded in the seismic attribute data of that point location.

In a specific embodiment, the apparatus for intelligent interpretation of the seismic high-frequency sequence using the logging information further includes a third module, which is configured to obtain a high-frequency sequence division result for the target block after using a constructed classification model to perform sequence classification on the high-frequency sequence stratigraphy data.

In a specific embodiment, the sequence prediction neural network is a sequence prediction neural network with a CRF layer added.

In a specific embodiment, the sequence prediction neural network includes a BiLSTM network and the CRF layer connected to an output end of the BiLSTM network.

In a specific embodiment, the apparatus for intelligent interpretation of the seismic high-frequency sequence using the logging information further includes a fourth module, which is configured to use, after the high-frequency sequence stratigraphy data of the determined seismic trace point location are obtained through the prediction, high-frequency sequence stratigraphy data of a well point of the known conditioning well to perform a geological reasonability judgment on the high-frequency sequence stratigraphy data of the determined seismic trace point location, and correct, if the high-frequency sequence stratigraphy data of the determined seismic trace point location are unreasonable, the high-frequency sequence stratigraphy data of the determined seismic trace point location.

In a specific embodiment, the approaches for correcting the high-frequency sequence stratigraphy data of the determined seismic trace point location include manual correction and adjustment of the constraints on the CRF layer.

In a specific embodiment, a point location predicted by the sequence stratigraphy prediction model in each state is limited to a circular area centered on a point on the sequential path, and if an overlap area exists between circular areas, a subsequently predicted point location in a circular area does not include a point location in the overlap area.

In a specific embodiment, the sequence stratigraphy prediction model in each state predicts high-frequency sequence stratigraphy data for a point location where an initial circle center on the sequential path is located.

In another aspect, an embodiment of the present invention further provide a machine-readable storage medium, storing a computer program thereon. The computer program, when executed by a processor, implements the above method for intelligent interpretation of the seismic high-frequency sequence using the logging information.

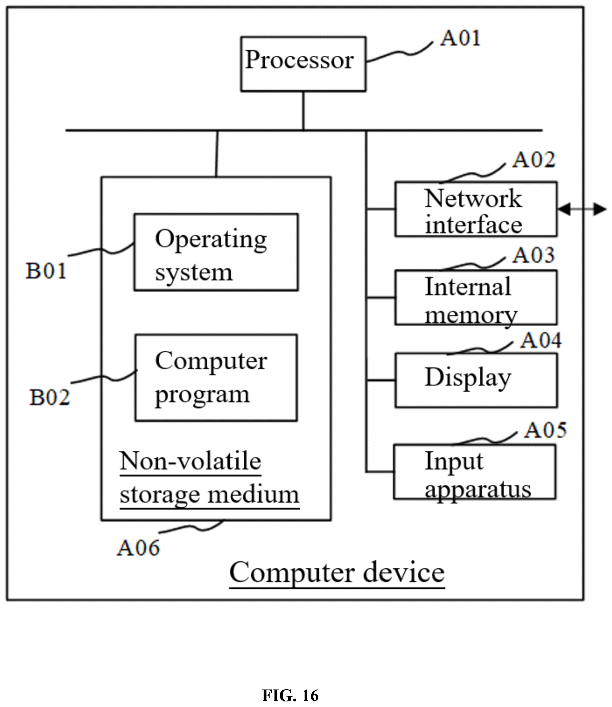

In yet another aspect, an embodiment of the present invention further provides a computer device. The computer device may be a terminal, and its internal structure diagram may be as shown in FIG. 16. The computer device includes a processor A01, a network interface A02, a display A04, an input apparatus A05, and a memory (not shown in the figure), which are connected via a system bus. The processor A01 of the computer device is configured to provide computing and control capabilities. The memory of the computer device includes an internal memory A03 and a non-volatile storage medium A06. The non-volatile storage medium A06 stores an operating system B01 and a computer program B02. The internal memory A03 provides an environment for running of the operating system B01 and the computer program B02 in the non-volatile storage medium A06. The network interface A02 of the computer device is configured for communication with an external terminal via a network connection. The computer program, when executed by the processor A01, implements the above method for intelligent interpretation of the seismic high-frequency sequence using the logging information. The display A04 of the computer device may be a liquid crystal display or an electronic ink display. The input apparatus A05 of the computer device may be a touch layer covering the display, or may be a key, a trackball, or a touchpad arranged on a casing of the computer device, or may further be an external keyboard, touchpad, or mouse, etc.

In an embodiment, the apparatus 400 for intelligent interpretation of the seismic high-frequency sequence using the logging information provided by the present invention may be implemented as a form of a computer program that can run on the computer device as shown in FIG. 15. The memory of the computer device may store various program modules that constitute the apparatus 400 for intelligent interpretation of the seismic high-frequency sequence using the logging information. The computer program composed of various program modules causes the processor to perform the steps in the method for intelligent interpretation of the seismic high-frequency sequence using the logging information described in this specification.

The apparatus embodiment described above is only illustrative. Units described as separate components may or may not be physically separated, and the components displayed as units may or may not be physical units, that is, they may be located in one place, or they may be distributed onto a plurality of network units. Some or all of the modules can be selected according to actual needs to realize the purpose of the solution of this embodiment. Those of ordinary skill in the art may understand and implement it without creative work.

It also needs to be noted that terms "include," "contain," or any other variant thereof, are intended to cover non-exclusive inclusion, such that a process, method, commodity or device that includes a series of elements includes not only those elements but also other elements that are not explicitly listed, or further includes elements that are inherent to such a process, method, commodity or device. Without further limitation, an element defined by a phrase "including a ..." does not exclude the existence of other identical elements in the process, method, commodity or device including the element.

Finally, it should be noted that: the above embodiments are only used to illustrate the technical solution of the present invention, not to limit it. Although the present inventionhas been described in detail with reference to the above embodiments, those of ordinary skill in the art should understand that: they can still modify the technical solution recorded in the above embodiments or make equivalent replacement for part of the technical features; and these modifications or replacements do not separate the essence of the corresponding technical solution from the spirit and scope of the technical solution of the embodiments of the present invention.

## Claims

1. A method for intelligent interpretation of a seismic high-frequency sequence using logging information, **characterized by** comprising:
inputting depth-information-associated seismic attribute data of a determined seismic trace point location into a sequence stratigraphy prediction model in a current state, so as to obtain high-frequency sequence stratigraphy data of the determined seismic trace point location, wherein the determined seismic trace point location is a point location, which is determined according to a sequential path, on a well-tie seismic trace of a known conditioning well in a target block; and
judging whether high-frequency sequence stratigraphy data of any seismic trace point location in the target block are not obtained, adding, if yes, the high-frequency sequence stratigraphy data of the determined seismic trace point location to sequential simulation condition data to update the sequential simulation condition data, using updated sequential simulation condition data to construct a learning sample to train the sequence stratigraphy prediction model in the current state, so as to obtain a trained sequence stratigraphy prediction model, then jumping to the previous step to perform a high-frequency sequence stratigraphy prediction on a next determined seismic trace point location determined according to the sequential path, and completing, if not, a high-frequency sequence stratigraphy prediction for the target block;
wherein initial-state sequential simulation condition data are used to construct a learning sample to train an initial sequence prediction neural network, then the sequence stratigraphy prediction model in an initial state is obtained, and the initial-state sequential simulation condition data comprise logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

2. The method for intelligent interpretation of the seismic high-frequency sequence using the logging information according to claim 1, **characterized in that** inputting the depth-information-associated seismic attribute data of the determined seismic trace point location into the sequence stratigraphy prediction model in the current state, so as to obtain the high-frequency sequence stratigraphy data of the determined seismic trace point location comprises:
determining, according to the sequential path, the determined seismic trace point location, on which a high-frequency sequence stratigraphy prediction is to be performed, on the well-tie seismic trace of the known conditioning well in the target block;
determining stratigraphy information of the determined seismic trace point location according to stratum top and bottom surface information learned from seismic data of the target block;
forming a seismic attribute sequence from seismic attribute data corresponding to each horizon in the determined seismic trace point location; and
associating and then inputting the seismic attribute sequence with depth information of each horizon in the determined seismic trace point location into the sequence stratigraphy prediction model in the current state, so as to obtain the high-frequency sequence stratigraphy data of the determined seismic trace point location.

3. The method for intelligent interpretation of the seismic high-frequency sequence using the logging information according to claim 1, **characterized in that** adding the high-frequency sequence stratigraphy data of the determined seismic trace point location to the sequential simulation condition data to update the sequential simulation condition data comprises:
establishing a correspondence between the seismic attribute data and the high-frequency sequence stratigraphy data of the determined seismic trace point location; and
adding, to the sequential simulation condition data, the seismic attribute data and the high-frequency sequence stratigraphy data of the determined seismic trace point location between which the correspondence is established, so as to update the sequential simulation condition data, wherein the updated sequential simulation condition data comprise the seismic attribute data and the high-frequency sequence stratigraphy data between which the correspondence is established, as well as the seismic attribute data in the target block for which no corresponding high-frequency sequence stratigraphy data is obtained.

4. The method for intelligent interpretation of the seismic high-frequency sequence using the logging information according to claim 1, **characterized in that** using the initial-state sequential simulation condition data to construct the learning sample to train the initial sequence prediction neural network, and then obtaining the sequence stratigraphy prediction model in the initial state comprises:
encoding each stratum in the logging high-frequency sequence stratigraphy data of the well-point seismic trace of the known conditioning well in the target block to obtain a stratum encoded sequence for each point location on the well-point seismic trace of the known conditioning well, and using the stratum encoded sequence for each point location as a sample label for seismic attribute data of each point location in a one-to-one correspondence; and
training the initial sequence prediction neural network using the seismic attribute data of each point location on the well-point seismic trace of the known conditioning well and the sample label corresponding to each seismic attribute datum, and obtaining the sequence stratigraphy prediction model in the initial state after training is completed.

5. The method for intelligent interpretation of the seismic high-frequency sequence using the logging information according to claim 2, **characterized in that** during associating and then inputting the seismic attribute sequence with the depth information of each horizon in the determined seismic trace point location into the sequence stratigraphy prediction model in the current state, a planar position code for the determined seismic trace point location is further embedded in the seismic attribute sequence for the determined seismic trace point location.

6. The method for intelligent interpretation of the seismic high-frequency sequence using the logging information according to claim 1, **characterized by** further comprising:
obtaining a high-frequency sequence division result for the target block after using a constructed classification model to perform sequence classification on the high-frequency sequence stratigraphy data.

7. The method for intelligent interpretation of the seismic high-frequency sequence using the logging information according to claim 1, **characterized in that** the sequence prediction neural network is a sequence prediction neural network with a CRF layer added.

8. The method for intelligent interpretation of the seismic high-frequency sequence using the logging information according to claim 7, **characterized in that** the sequence prediction neural network comprises a BiLSTM network and the CRF layer connected to an output end of the BiLSTM network.

9. The method for intelligent interpretation of the seismic high-frequency sequence using the logging information according to claim 6, **characterized in that** the classification model is a Softmax classifier.

10. The method for intelligent interpretation of the seismic high-frequency sequence using the logging information according to claim 7, **characterized by** further comprising:
using, after the high-frequency sequence stratigraphy data of the determined seismic trace point location are obtained through the prediction, high-frequency sequence stratigraphy data of a well point of the known conditioning well to perform a geological reasonability judgment on the high-frequency sequence stratigraphy data of the determined seismic trace point location, and correcting, if the high-frequency sequence stratigraphy data of the determined seismic trace point location are unreasonable, the high-frequency sequence stratigraphy data of the determined seismic trace point location.

11. The method for intelligent interpretation of the seismic high-frequency sequence using the logging information according to claim 10, **characterized in that** correcting the high-frequency sequence stratigraphy data of the determined seismic trace point location comprises:
generating, according to an unreasonable sequence of the determined seismic trace point location reflected by the high-frequency sequence stratigraphy data of the determined seismic trace point location and the high-frequency sequence stratigraphy data of the well point of the known conditioning well, a correction instruction for manually correcting the unreasonable sequence;
or,
generating, according to the unreasonable sequence of the determined seismic trace point location reflected by the high-frequency sequence stratigraphy data of the determined seismic trace point location and the high-frequency sequence stratigraphy data of the well point of the known conditioning well, a correction instruction for adjusting a constraint on the CRF layer, updating the sequence stratigraphy prediction model based on an adjusted constraint on the CRF layer, and inputting the depth-information-associated seismic attribute data of the determined seismic trace point location into an updated sequence stratigraphy prediction model, so as to obtain corrected high-frequency sequence stratigraphy data of the determined seismic trace point location.

12. The method for intelligent interpretation of the seismic high-frequency sequence using the logging information according to claim 1, **characterized in that** a seismic trace point location predicted by the sequence stratigraphy prediction model in each state is limited to a circular area centered on a point on the sequential path, and if an overlap area exists between circular areas, a subsequently predicted seismic trace point location in a circular area does not comprise a seismic trace point location in the overlap area.

13. An apparatus for intelligent interpretation of a seismic high-frequency sequence using logging information, **characterized by** comprising:
a first module, configured to input, into a sequence stratigraphy prediction model in a current state, depth-information-associated seismic attribute data of a determined seismic trace point location, which is determined according to a sequential path, on a well-tie seismic trace of a known conditioning well in a target block, so as to obtain high-frequency sequence stratigraphy data of the determined seismic trace point location; and
a second module, configured to judge whether high-frequency sequence stratigraphy data of any seismic trace point location in the target block are not obtained, add, if yes, the high-frequency sequence stratigraphy data of the determined seismic trace point location to sequential simulation condition data to update the sequential simulation condition data, use updated sequential simulation condition data to construct a learning sample to train the sequence stratigraphy prediction model in the current state, so as to obtain a trained sequence stratigraphy prediction model, so that the first module performs a high-frequency sequence stratigraphy prediction on a next determined seismic trace point location determined according to the sequential path, and complete, if not, a high-frequency sequence stratigraphy prediction for the target block;
wherein initial-state sequential simulation condition data are used to construct a learning sample to train an initial sequence prediction neural network, then the sequence stratigraphy prediction model in an initial state is obtained, and the initial-state sequential simulation condition data comprise logging high-frequency sequence stratigraphy data and seismic attribute data of a well-point seismic trace of the known conditioning well in the target block between which a correspondence is established, as well as seismic attribute data of a well-point seismic trace of a non-known conditioning well in the target block; and the seismic attribute data are seismic attribute data sensitive to the high-frequency sequence.

14. A computer device, comprising a memory, a processor, and a computer program stored on the memory and capable of running on the processor, **characterized in that** the processor, when executing the program, implements the method for intelligent interpretation of the seismic high-frequency sequence using the logging information according to any one of claims 1 to 12.

15. A machine-readable storage medium, storing a computer program thereon, **characterized in that** the computer program, when executed by a processor, implements the method for intelligent interpretation of the seismic high-frequency sequence using the logging information according to any one of claims 1 to 12.
